# EUROPEAN PATENT SPECIFICATION

(11) **EP 2 930 037 B1**
(45) Date of publication and mention of the grant of the patent: **24.07.2019**
(21) Application number: 15162277.6
(22) Date of filing: 01.04.2015
(51) Int. Cl.: B60C 23/04, B64C 25/40

(54) **NOSE WHEEL TIRE PRESSURE SENSING SYSTEM AND APPARATUS**
BUGRAD-REIFENDRUCKÜBERWACHUNGSSYSTEM UND VORRICHTUNG
SYSTÈME ET APPAREIL DE DÉTECTION DE LA PRESSION D'UN PNEU DE ROUE AVANT

(30) Priority: 07.04.2014 US 201414247060
(43) Date of publication of application: 14.10.2015
(73) Proprietor: Goodrich Corporation, Charlotte, NC 28217-4578 (US)
(72) Inventor: Keller, Steven, Union, OH Ohio 45322 (US); Summers, Paul L., Troy, OH Ohio 45373 (US)
(74) Representative: Dehns

(56) References cited:
- EP-A1- 2 000 332
- WO-A1-02/078985
- FR-A1- 2 817 509
- US-A1- 2005 046 558

## Description

### FIELD

The present disclosure relates to tire pressure sensing, and more specifically, to a tire pressure sensing system, apparatus and method for a nose gear/wheel mounted sensor.

### BACKGROUND

Aircraft are often towed by the nose landing gear. For example, the tow bar of a tug may be coupled to the nose landing gear, allowing the tug to move and/or position the aircraft on the tarmac. More specifically, pins from the tow bar may be inserted into the axle of the nose landing gear to connect the tow bar to the aircraft. In order to make this connection, the region around the axle may need to be relatively free of interfering structure to allow the aircraft to be towed.

FR 2817509 A, US 2005/046558 and WO 02/078985, according to the preamble of claim 1, all relate to monitoring tire pressure.

### SUMMARY

In various embodiments, a tire pressure monitoring system may comprise a rotating module and a stationary module. The rotating module may include a body and a pressure sensor. The body may be configured to be installed in a wheel. The pressure sensor may be housed within the body. The pressure sensor may be in fluid communication with a chamber defined by a tire installed on the wheel. The stationary module may be configured to be mounted on a landing gear strut. The stationary module may be configured to receive data from the rotating module.

In various embodiments, a landing gear may comprise a strut, an axle, a wheel and a tire. The strut may include a stationary sensor portion. The axle may be operatively coupled to the strut. The wheel may be rotatably mounted on the axle. The wheel may include a rotating sensor portion. The rotating sensor portion may be in electronic communication with the stationary sensor portion. The tire may be mounted on the wheel. The tire may define a chamber that is configured to be pressurized. The rotating sensor portion may be in fluid communication with the chamber.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 illustrates a front view of an aircraft with deployed landing gear, in accordance with various embodiments.
FIG. 2A illustrates a front view of a nose landing gear, in accordance with various embodiments.
FIG. 2B illustrates a cross-sectional front view of a landing gear and wheel assembly, in accordance with various embodiments.
FIG. 3 illustrates a perspective view of a rotating module, in accordance with various embodiments.
FIG. 4 is a block diagram of a tire pressure monitoring system, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the inventions, it should be understood that other embodiments may be realized and that logical changes and adaptations in design and construction may be made in accordance with this invention and the teachings herein. Thus, the detailed description herein is presented for purposes of illustration only and not of limitation. The scope of the invention is defined by the appended claims. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

Furthermore, any reference to singular includes plural embodiments, and any reference to more than one component or step may include a singular embodiment or step. Surface shading lines may be used throughout the figures to denote different parts but not necessarily to denote the same or different materials.

As used herein, "aft" refers to the direction associated with the tail (e.g., the back end) of an aircraft, or generally, to the direction of exhaust of the gas turbine. As used herein, "forward" refers to the direction associated with the nose (e.g., the front end) of an aircraft, or generally, to the direction of flight or motion.

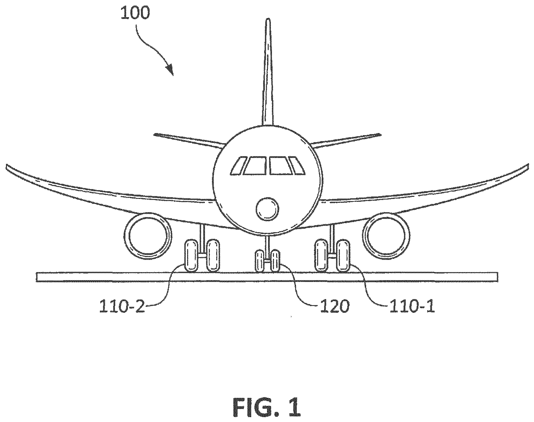

In various embodiments and with reference to FIG. 1, an aircraft 100 may comprise a landing gear system including a first main landing gear 110-1, a second main landing gear 110-2, and a nose landing gear 120. Nose landing gear 120 may be installed in a forward portion of the aircraft fuselage (e.g., forward of the engines) at the nose of the fuselage. First main landing gear 110-1 and second main landing gear 110-2 may be installed aft nose landing gear 120. First main landing gear 110-1, second main landing gear 110-2, and nose landing gear 120 may generally support the aircraft when it is not flying allowing it to take off, land, and taxi without damage.

In various embodiments, aircraft are often towed by the nose axle of nose landing gear 120. As such, aircraft monitoring systems including, for example, sensors need to be installed on the nose gear in such a manner that the aircraft 100 is able to be towed and the monitoring systems can adequately monitor the aircraft 100.

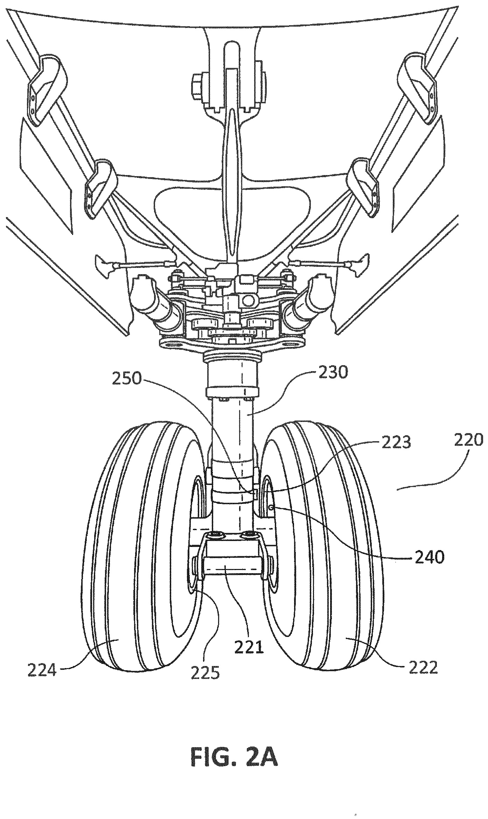

In various embodiments and with reference to FIG. 2A, nose landing gear 220 may comprise a first wheel 223 and a second wheel 225 coupled to landing gear strut 230. First wheel 223 may be operatively coupled to a tire 222. In this regard, tire 222 may be mounted on first wheel 223. Tire 222 may define a pressurizable chamber between tire 222 and first wheel 223. Similarly, a tire 224 may be mounted on and/or coupled to second wheel 225. First wheel 223 and second wheel 225 may operatively couple to and/or rotatably couple to an axle assembly 221. Axle assembly 221 may operatively couple to landing gear strut 230.

In various embodiments, it may be desirable to monitor tire pressure for tire 222 and/or tire 224 (e.g., the pressure inside the chamber defined between tire 222 and first wheel 223 and/or tire 224 and second wheel 225). In this regard, a tire pressure sensor system may be installed on first wheel 223 and/or second wheel 225. The tire pressure sensor system may comprise a rotating module 240 (e.g., a rotating coil, a rotating sensor, a rotation portion and/or the like) and a stationary module 250 (e.g., a stationary coil, a stationary sensor, a stationary portion and/or the like).

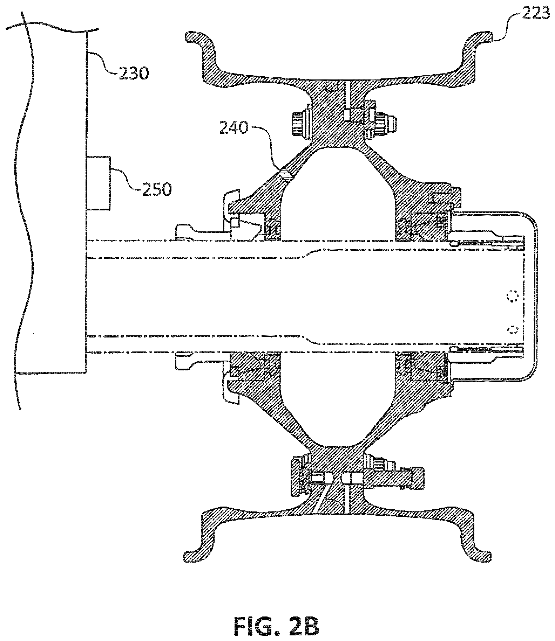

In various embodiments and with reference to FIGs. 2A and 2B, rotating module 240 may be installed on an inboard portion of first wheel 223. In this regard, rotating module 240 may be installed on a portion of first wheel 223 adjacent landing gear strut 230. Stationary module 250 may be installed on a portion of landing gear strut 230. For example, the stationary module 250 may be installed on an outboard portion of landing gear strut 230 that is inboard of first wheel 223 and/or tire 222. In this regard, the stationary module 250 and rotating module 240 of the tire pressure sensor system may be installed in the area between landing gear strut 230 and wheel 223 / tire 222. Moreover, this installation arrangement may allow for towing of the aircraft by a tug at nose landing gear 220 where a tug is configured to connect to nose gear 220 with pins through outboard portions of first wheel 223 and/or second wheel 225.

In various embodiments and in operation, stationary module 250 may be in relatively close proximity to rotating module 240. By minimizing the distance between stationary module 250 and rotating module 240, the tire pressure sensor system may require less power to operate and/or transfer data. Moreover, as the distance between stationary module 250 and rotating module 240 increases, the system may require more power and the probability of increased noise and/or interference is greater.

In various embodiments, the tire pressure sensor system may be configured to monitor tire pressure (e.g., the pressure in the chamber defined by tire 222 and/or the pressure in the chamber defined by tire 224). The tire pressure sensor system may also be configured to monitor the temperature of the tire, wheel and/or surrounding environment.

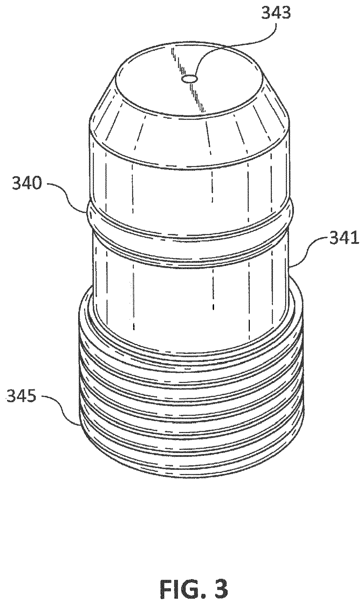

In various embodiments and with reference to FIG. 3, rotating module 340 may include a body 341. Body 341 may include a pressure sensing port 343. Body 341 may also include and/or define a thread 345. In this regard, rotating module 340 may be rotatably installed in a port in the wheel. Such a port in a wheel may offer access to the volume between the wheel and a tire, which in operation, is typically pressurized. In this regard, pressure sensing port 343 of rotating module 340 may be in fluid communication with the pressurized air within the tire.

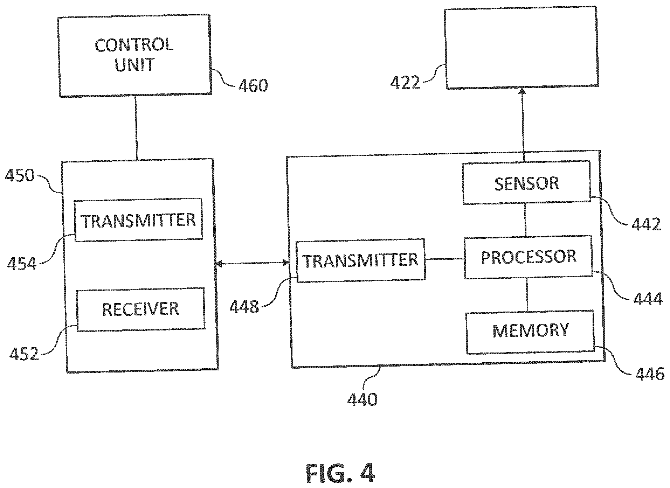

In various embodiments and with reference to FIG. 4, rotating module 440 may comprise a pressure sensor 442, a processor 444, and a memory 446. Pressure sensor 442 may be in fluid communication with a tire 422 and/or the pressurizable chamber defined by tire 422. Rotating module 440 may also comprise a transmitter 448. Rotating module 440 may comprise and/or be operatively coupled to a suitable power source. For example, rotating module 440 may comprise a battery. Rotating module 440 may also be coupled to an aircraft power source. In this regard, rotating module 440 may be coupled to a hard wired power source that is configured to provide power to a brake actuator and/or other suitable system that is located within the vicinity of the wheel. Rotating module 440 may be configured to receive power via an inductive power source.

In various embodiments, rotating module 440 and/or stationary module 450 may be capable of being read during an on-ground inspection (e.g., a pilot walk around). In this regard, rotating module 440 and/or stationary module 450 may be read with a "wand device" (e.g., a detector, a smart phone, and/or the like). Rotating module 440 and/or stationary module 450 may also comprise a suitable indicator (e.g., a visual indicator, an audio indicator, and/or the like).

In various embodiments, stationary module 450 may comprise a receiver 452 and a transmitter 454. In various embodiments, stationary module 450 may be operatively coupled and/or in electronic communication with a control unit 460. Transmitter 448 of rotating module 440 may be in electronic communication with and configured to transmit data indicative of a pressure condition in tire 422 measured by pressure sensor 442 to receiver 452 of stationary module 450. Transmitter 454 of stationary module 450 may be configured to communicate the data to control unit 460.

In various embodiments, control unit 460 may be any suitable control unit configured to monitor, analyze, transmit, store, and/or otherwise process data. Control unit 460 may comprise a processor and a memory. Control unit 460 may also comprise one or more transmitters and/or receivers configured to transmit and receive data to and from various aircraft systems. Control unit 460 may be, for example, the aircraft brake control unit, and/or the like.

In various embodiments, stationary module 450 may be coupled to any suitable power source and/or aircraft system. For example, stationary module 450 may be coupled to an aircraft power source (e.g., a hard wired power source). Stationary module 450 may also include a battery.

In various embodiments and with continued reference to FIG. 4, rotating module 440 may be in electronic communication with stationary module 450. In this regard, data may be transferred from rotating module 440 to stationary module 450. This data may be further communicated from stationary module 450 to a control unit 460, the cockpit, and/or the like. Control unit 460 may be configured to analyze the data provided by rotating module 440 and/or stationary module 450. For example, control unit 460 may be configured to determine a sensed pressure and/or a pressure condition based on the data. Control unit 460 may also be configured to compare the data to a threshold be determine whether the pressure in the tire is outside a predetermined pressure range.

In various embodiments, control unit 460 may be capable of providing an indication of a tire pressure condition. For example, control unit 460 may illuminate a cockpit light in response to a tire pressure condition being below a threshold. Moreover, control unit 460 may be capable of transmitting and/or displaying a sensed pressure in the cockpit.

In various embodiments, and in operation, tire pressure is generally checked as part of a preflight check by the pilot. This preflight check may include, for example, a visual inspection and an evaluation of tire pressure based on a tire pressure reading from the tire pressure sensor system and/or control unit 460. The tire pressure sensor system and/or control unit 460 may be capable of alerting a crew member to a low tire pressure condition in response to a flight event (e.g., a taxi, takeoff, and/or landing). For example, the tire pressure sensor system and/or control unit 460 may also be capable of measuring tire pressure and/or indicating low tire pressure in flight and/or prior to a landing event. In this regard, the tire pressure sensor system and more specifically rotating module 440 and stationary module 450 may monitor tire pressure in a tire in a stowed position to determine whether a tire has low pressure prior to landing.

## Claims

1. A landing gear, comprising:
a strut (230) comprising a stationary sensor portion (250);
an axle (221) operatively coupled to the strut;
a wheel (223) rotatably mounted on the axle and comprising a rotating sensor portion (240) in electronic communication with the stationary sensor portion, the rotating sensor portion comprising a pressure sensor (442), processor (444), a memory (446), and a transmitter, housed within a body (341), the transmitter configured to transmit data indicative of a pressure condition in a tire as measured by the pressure sensor; and
the tire (222) mounted on the wheel and defining a chamber that is configured to be pressurized, wherein the rotating sensor portion is in fluid communication with the chamber; **characterised in that** the stationary sensor portion (250) is so mounted on the landing gear strut (230) that the distance between said stationary sensor portion (250) and said rotating sensor portion (240) will be minimised.

2. The landing gear of claim 1, wherein the stationary sensor portion is in electronic communication with a control unit (460).

3. The landing gear of claim 2, wherein the control unit is configured to provide an indication of pressure in the chamber.

4. The landing gear of claim 3, wherein the indication is at least one of a pressure reading and an indication that the pressure in the chamber is below a threshold.

5. The landing gear of any preceding claim, wherein the rotating sensor portion comprises a threaded body that is rotatably receivable within a port in the wheel.

6. The landing gear of claim any preceding claim, wherein the rotating sensor portion is installed on the in-board side of the wheel, adjacent the strut.

7. The landing gear of any preceding claim, wherein the body is installed on an in-board potion of the wheel.

8. The landing gear of any preceding claim, wherein the landing gear is a nose landing gear (220).

9. The landing gear of claim 8, wherein the nose landing gear is capable of being towed.

## Patentansprüche

1. Fahrwerk, umfassend:
eine Strebe (230), die einen stationären Sensorabschnitt (250) umfasst;
eine Achse (221), die mit der Strebe wirkverbunden ist;
ein Rad (223), das drehbar auf der Achse montiert ist und einen sich drehenden Sensorabschnitt (240) in elektronischer Verbindung mit dem stationären Sensorabschnitt umfasst, wobei der sich drehende Sensorabschnitt einen Drucksensor (442), einen Prozessor (444), einen Speicher (446) und einen Sender, die innerhalb eines Gehäuses (341) aufgenommen sind, umfasst, wobei der Sender dazu konfiguriert ist, Daten zu übermitteln, die einen Druckzustand in einem Reifen anzeigen, wie dieser durch den Drucksensor gemessen wird; und
den Reifen (222), der auf dem Rad montiert ist und eine Kammer definiert, die dazu konfiguriert ist, unter Druck gesetzt zu werden, wobei der sich drehende Sensorabschnitt in Fluidverbindung mit der Kammer steht; **dadurch gekennzeichnet, dass** der stationäre Sensorabschnitt (250) so auf der Fahrwerksstrebe (230) montiert ist, dass der Abstand zwischen dem stationären Sensorabschnitt (250) und dem sich drehenden Sensorabschnitt (240) möglichst gering gehalten wird.

2. Fahrwerk nach Anspruch 1, wobei der stationäre Sensorabschnitt in elektronischer Verbindung mit einer Steuereinheit (460) steht.

3. Fahrwerk nach Anspruch 2, wobei die Steuereinheit dazu konfiguriert ist, eine Anzeige des Drucks in der Kammer bereitzustellen.

4. Fahrwerk nach Anspruch 3, wobei die Anzeige mindestens eine von einer Druckablesung und einer Anzeige, dass sich der Druck in der Kammer unter einem Schwellenwert befindet, ist.

5. Fahrwerk nach einem der vorhergehenden Ansprüche, wobei der sich drehende Sensorabschnitt einen Gewindekörper umfasst, der drehbar innerhalb einer Öffnung in dem Rad aufgenommen werden kann.

6. Fahrwerk nach einem der vorhergehenden Ansprüche, wobei der sich drehende Sensorabschnitt auf der innenliegenden Seite des Rads, benachbart zu der Strebe installiert ist.

7. Fahrwerk nach einem der vorhergehenden Ansprüche, wobei das Gehäuse auf einem innenliegenden Abschnitt des Rads installiert ist.

8. Fahrwerk nach einem der vorhergehenden Ansprüche, wobei das Fahrwerk ein Bugfahrwerk (220) ist.

9. Fahrwerk nach Anspruch 8, wobei das Bugfahrwerk gezogen werden kann.

## Revendications

1. Train d'atterrissage comprenant :
une jambe (230) comprenant une partie de capteur fixe (250) ;
un essieu (221) couplé de manière fonctionnelle à la jambe ;
une roue (223) montée en rotation sur l'essieu et comprenant une partie de capteur rotatif (240) en communication électronique avec la partie de capteur fixe, la partie de capteur rotatif comprenant un capteur de pression (442), un processeur (444), une mémoire (446) et un émetteur, logé à l'intérieur d'un corps (341), l'émetteur étant configuré pour émettre des données indiquant une condition de pression dans un pneu telle que mesurée par le capteur de pression ; et
le pneu (222) étant monté sur la roue et définissant une chambre qui est configurée pour être mise sous pression, dans lequel la partie de capteur rotatif est en communication fluidique avec la chambre ; **caractérisé en ce que** la partie de capteur fixe (250) est montée sur la jambe de train d'atterrissage (230) de sorte que la distance entre ladite partie de capteur fixe (250) et ladite partie de capteur rotatif (240) sera minimisée.

2. Train d'atterrissage selon la revendication 1, dans lequel la partie de capteur fixe est en communication électronique avec une unité de commande (460).

3. Train d'atterrissage selon la revendication 2, dans lequel l'unité de commande est configurée pour fournir une indication de la pression dans la chambre.

4. Train d'atterrissage selon la revendication 3, dans lequel l'indication est au moins l'une d'une lecture de pression et d'une indication que la pression dans la chambre est inférieure à un seuil.

5. Train d'atterrissage selon une quelconque revendication précédente, dans lequel la partie de capteur rotatif comprend un corps fileté qui peut être reçu de manière rotative à l'intérieur d'un orifice dans la roue.

6. Train d'atterrissage selon une quelconque revendication précédente, dans lequel la partie de capteur rotatif est installée du côté intérieur de la roue, à proximité de la jambe.

7. Train d'atterrissage selon une quelconque revendication précédente, dans lequel le corps est installé sur une partie intérieure de la roue.

8. Train d'atterrissage selon une quelconque revendication précédente, dans lequel le train d'atterrissage est un train d'atterrissage avant (220).

9. Train d'atterrissage selon la revendication 8, dans lequel le train d'atterrissage avant est apte à être remorqué.
